# EUROPEAN PATENT APPLICATION

(11) **EP 4 716 364 A1**
(43) Date of publication of application: **25.03.2026**
(21) Application number: 23937516.5
(22) Date of filing: 17.05.2023
(51) Int. Cl.: H04W 88/14, H04W 28/088

(54) **TERMINAL, BASE STATION, AND NETWORK NODE**

(71) Applicant: NTT DOCOMO, INC., Tokyo 100-6150 (JP)
(72) Inventor: MINOKUCHI, Atsushi, Tokyo 100-6150 (JP); DOJIRI, Syunsuke, Tokyo 100-6150 (JP); SAWADA, Masahiro, Tokyo 100-6150 (JP)
(74) Representative: Hoffmann Eitle
(86) International application number: PCT/JP2023/018467
(87) International publication number: WO 2024/236778

(57) **Abstract**

A network node includes a reception unit configured to receive, from a session management node, a message requesting accumulation of control signals transmitted from a mobility management node to the session management node; a transmission unit configured to transmit, to the mobility management node, a message requesting transmission of the control signals to the network node; and a control unit configured to accumulate the control signals received from the mobility management node, wherein the transmission unit transmits the control signals to the session management node in response to a request from the session management node.

## Description

### FIELD OF INVENTION

The present invention relates to a terminal, base station, and network node in a communication system.

### BACKGROUND ART

In the 3rd Generation Partnership Project (3GPP) (registered trademark), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies are being discussed to satisfy the requirement of a radio link delay of 1 ms or less while achieving throughput of 10 Gbps or more.

In NR, network architectures are being considered that include the 5G Core Network (5GC), which corresponds to the Evolved Packet Core (EPC), the core network in the Long Term Evolution (LTE) architecture, and the Next Generation Radio Access Network (NG-RAN), which corresponds to the Evolved Universal Terrestrial Radio Access Network (E-UTRAN), the RAN in the LTE architecture (e.g., Non-Patent Literature 1).

### CITATION LIST

### Non-Patent Literature

Non-Patent Literature 1: 3GPP TS 23.501 V18.1.0 (2023-03)
Non-Patent Literature 2: 3GPP TS 23.288 V18.1.0 (2023-03)
Non-Patent Literature 3: 3GPP TS 24.501 V18.2.1 (2023-03)
Non-Patent Literature 4: 3GPP TS 29.574 V18.1.0 (2023-03)
Non-Patent Literature 5: 3GPP TS 29.575 V18.1.0 (2023-03)
Non-Patent Literature 6: 3GPP TS 29.518 V18.1.0 (2023-03)
Non-Patent Literature 7: 3GPP TS 38.413 V17.4.0 (2023-03)
Non-Patent Literature 8: 3GPP TS 38.331 V17.4.0 (2022-12)

### SUMMARY OF INVENTION

### TECHNICAL PROBLEM

In 6G, the next generation following 5G, one of the challenges is to improve the congestion tolerance of the core network.

The present invention has been made in view of the above circumstances, and aims to improve the congestion tolerance of the core network.

### SOLUTION TO PROBLEM

According to the disclosed technique, a network node is provided. The network node includes:
a reception unit configured to receive, from a session management node, a message requesting accumulation of control signals transmitted from a mobility management node to the session management node;
a transmission unit configured to transmit, to the mobility management node, a message requesting transmission of the control signals to the network node; and
a control unit configured to accumulate the control signals received from the mobility management node,
wherein the transmission unit transmits the control signals to the session management node in response to a request from the session management node.

### ADVANTAGEOUS EFFECTS OF INVENTION

According to the disclosed technique, it is possible to improve the congestion tolerance of the core network.

### BRIEF DESCRIPTION OF DRAWINGS

[FIG. 1] FIG. 1 is a diagram illustrating an example of a communication system.
[FIG. 2] FIG. 2 is a diagram illustrating an example of a communication system in a roaming environment.
[FIG. 3] FIG. 3 is a diagram illustrating an example of a first sequence diagram according to an embodiment of the present invention.
[FIG. 4] FIG. 4 is a diagram illustrating an example of a second sequence diagram according to an embodiment of the present invention.
[FIG. 5] FIG. 5 is a diagram illustrating an example of a functional configuration of a base station 10 and a network node 30 according to an embodiment of the present invention.
[FIG. 6] FIG. 6 is a diagram illustrating an example of a functional configuration of a terminal 20 according to an embodiment of the present invention.
[FIG. 7] FIG. 7 is a diagram illustrating an example of a hardware configuration of the base station 10, the terminal 20, and the network node 30 according to an embodiment of the present invention.
[FIG. 8] FIG. 8 is a diagram illustrating an example of a configuration of a vehicle 2001 according to an embodiment of the present invention.

### DESCRIPTION OF EMBODIMENTS

Hereinafter, embodiments of the present invention will be described with reference to the drawings. It should be noted that the embodiments described below are merely examples, and the embodiments to which the present invention can be applied are not limited to those described herein.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless Local Area Network (LAN), unless otherwise specified.

Further, in an embodiment of the present invention, the expression, radio (wireless) parameters are "configured (set)" may mean that a predetermined value is pre-configured, or may mean that a radio parameter indicated by a network node 30 or a terminal 20 is configured.

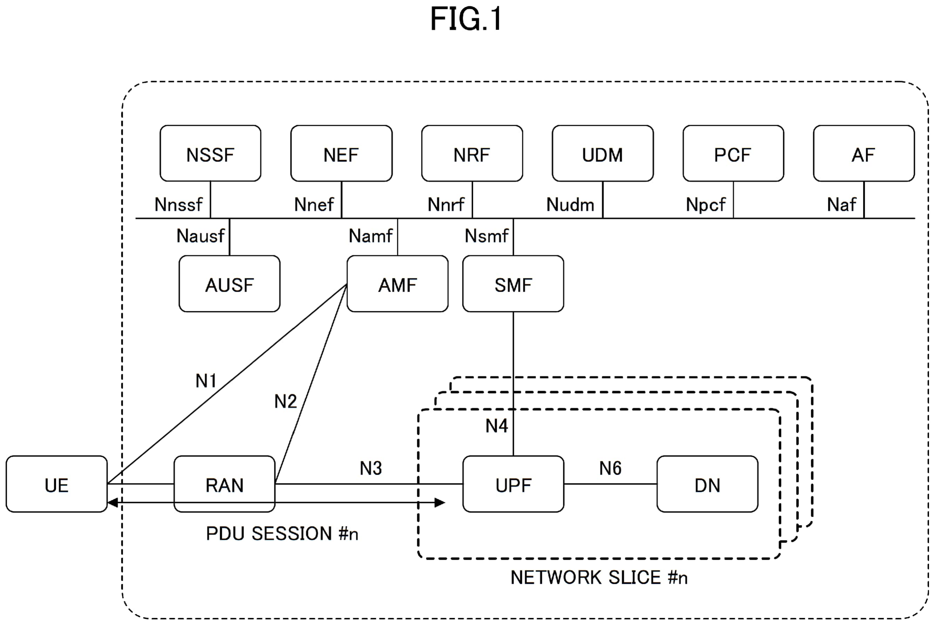

FIG. 1 is a diagram illustrating an example of a communication system. As illustrated in FIG. 1, the communication system includes a terminal 20, which is a User Equipment (UE), and a plurality of network nodes 30. In the following description, it is assumed that one network node 30 corresponds to one function; however, a single network node 30 may implement multiple functions, or multiple network nodes 30 may implement a single function. In addition, the term "connection" described below may refer to either a logical connection or a physical connection.

A Radio Access Network (RAN) is a network node 30 having a radio access function, and may include a base station 10. The RAN is connected to a UE, an Access and Mobility Management Function (AMF), and a User Plane Function (UPF). The AMF is a network node 30 having functions such as termination of the RAN interface, termination of Non-Access Stratum (NAS), registration management, connection management, reachability management, and mobility management. The UPF is a network node 30 having functions such as a Protocol Data Unit (PDU) session point for external interconnection with a Data Network (DN), packet routing and forwarding, and QoS (Quality of Service) handling in the user plane. The UPF and DN constitute a network slice. In the wireless communication network according to the embodiment of the present invention, a plurality of network slices are constructed.

The AMF is connected to a UE, a RAN, a Session Management function (SMF), a Network Slice Selection Function (NSSF), a Network Exposure Function (NEF), a Network Repository Function (NRF), a Unified Data Management (UDM), an Authentication Server Function (AUSF), a Policy Control Function (PCF), and an Application Function (AF). The AMF, SMF, NSSF, NEF, NRF, UDM, AUSF, PCF, and AF are network nodes 30 that are interconnected via respective service-based interfaces, Namf, Nsmf, Nnssf, Nnef, Nnrf, Nudm, Nausf, Npcf, and Naf.

The SMF is a network node 30 having functions such as session management, Internet Protocol (IP) address allocation and management of the UE, a Dynamic Host Configuration Protocol (DHCP) function, Address Resolution Protocol (ARP) proxy, and roaming function. The NEF is a network node 30 having a function of indicating capabilities and events to other NF (Network Functions). The NSSF is a network node 30 having a function of selecting the network slice to which the UE connects, determining the permitted Network Slice Selection Assistance Information (NSSAI), determining the set NSSAI, and determining the AMF set to which the UE connects. The PCF is a network node 30 having a function of controlling the policy of the network. The AF is a network node 30 having a function of controlling the application server. The NRF is a network node 30 having a function of discovering the NF instance that provides the service. The UDM is a network node 30 managing subscriber data and authentication data. The UDM is connected to a User Data Repository (UDR) holding the data.

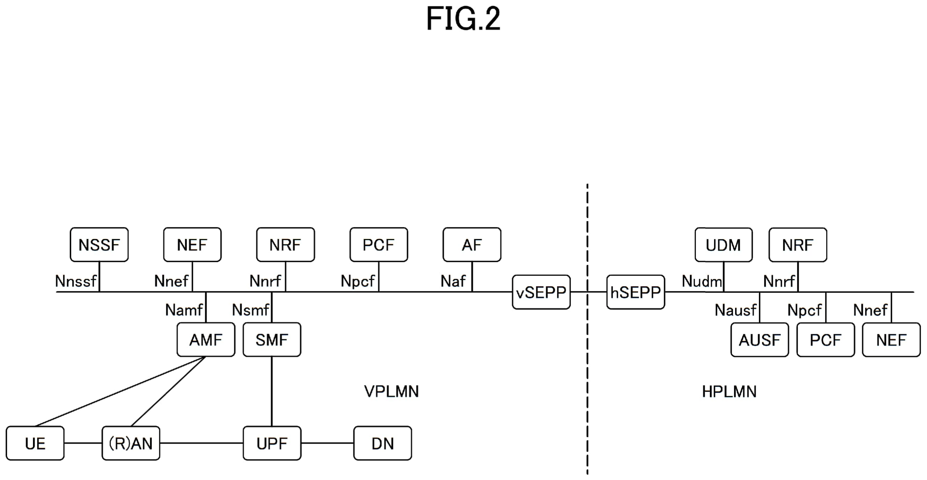

FIG. 2 is a diagram illustrating an example of a communication system under a roaming environment. As illustrated in FIG. 2, the network consists of a UE as a terminal 20 and a plurality of network nodes 30. Hereinafter, one network node 30 corresponds to each function, but a plurality of functions may be implemented by one network node 30 or a plurality of network nodes 30 may implement one function. The "connection" described below may be a logical connection or a physical connection.

The RAN is a network node 30 having a radio access function and is connected to the UE, AMF, and UPF. The AMF is a network node 30 having functions such as termination of the RAN interface, termination of the NAS, registration management, connection management, reachability management, and mobility management. The UPF is a network node 30 having functions such as PDU session points to the outside interconnected with the DN, packet routing and forwarding, and QoS handling of the user plane. The UPF and the DN constitute a network slice. In the wireless communication network of the embodiment of the present invention, a plurality of network slices are constructed.

The AMF is connected to UE, RAN, SMF, NSSF, NEF, NRF, UDM, AUSF, PCF, AF, and Security Edge Protection Proxy (SEPP). AMF, SMF, NSSF, NEF, NRF, UDM, AUSF, PCF, and AF are network nodes 30 interconnected via respective service-based interfaces, Namf, Nsmf, Nnssf, Nnef, Nnrf, Nudm, Nausf, Npcf, and Naf.

The SMF is a network node 30 having functions such as session management, IP address allocation and management of the UE, a DHCP function, ARP proxy, and a roaming function. The NEF is a network node 30 having functions such as indicating capabilities and events to other NFs. The NSSF is a network node 30 having functions such as selecting the network slice to which the UE connects, determining the allowed NSSAI, determining the configured NSSAI, and determining the AMF set to which the UE connects. The PCF is a network node 30 having functions such as policy control of the network. The AF is a network node 30 having functions such as controlling application servers. The NRF is a network node 30 having functions such as discovering NF instances that provide services. The SEPP is a non-transparent proxy that filters control plane messages between Public Land Mobile Networks (PLMNs). The vSEPP illustrated in FIG. 2 is a SEPP in the visited network, and the hSEPP is a SEPP in the home network.

As illustrated in FIG. 2, the UE is in a roaming environment where the UE is connected to a RAN and an AMF in the Visited Public Land Mobile Network (VPLMN). The VPLMN and the HPLMN (Home Public Land Mobile Network) are connected via the vSEPP and the hSEPP. The UE can communicate with the UDM of the HPLMN, for example, via the AMF of the VPLMN.

In FIGS. 1 and 2, a Data Collection Coordination Function (DCCF), which is one of the network nodes 30, is present. The DCCF has a function of transmitting data collected, for example, in response to a request. For details of the DCCF, reference may be made to Non-Patent Literature 2. The network node having the function of the AMF or a similar function may be referred to as a mobility management node, the network node having the function of the SMF or a similar function may be referred to as a session management node, and the network node having the function of the DCCF or a similar function may be referred to as a data management node.

### (First Embodiment)

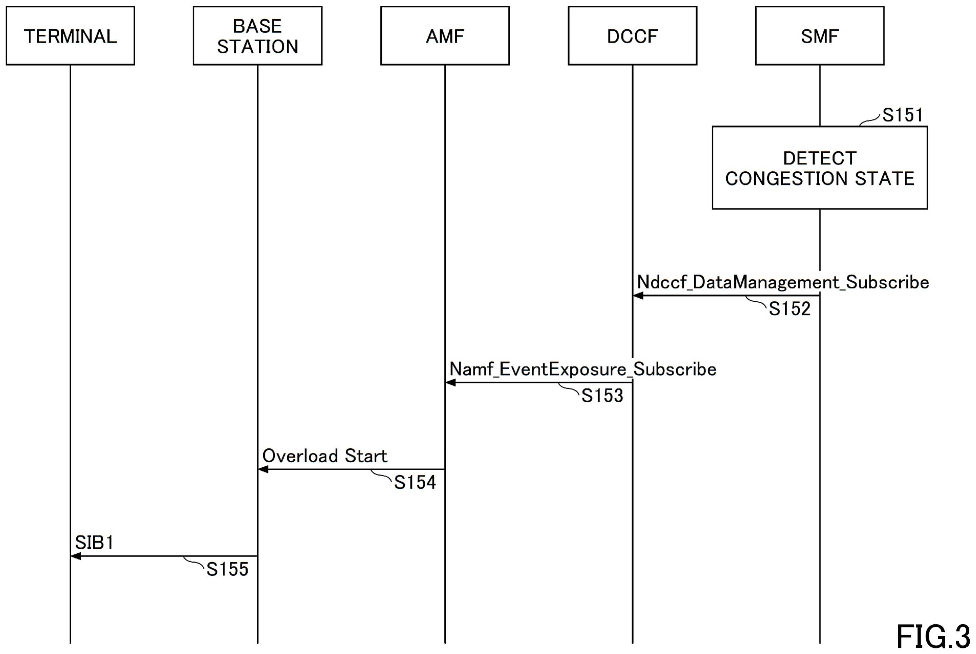

First embodiment will be described. The first embodiment illustrates an operation for improving congestion tolerance in the core network. FIG. 3 is a diagram illustrating an example of a first sequence diagram according to an embodiment of the present invention. As a pre-configuration, in addition to a "normal time set" of SM NAS timers, which are timers related to session management (refer to Section 10.3 "Timers of 5GS session management" in Non-Patent Literature 3), a "congestion time set" is newly defined. In a case where the terminal 20 receives information via broadcast information (e.g., SIB1) indicating that the SM NAS communication mode should be changed during congestion, the terminal 20 uses SM NAS timers that belong to the "congestion time set." Hereinafter, the processing of each step illustrated in FIG. 3 will be described.

Step S151: The SMF detects the congestion state.

Step S152: The SMF transmits a message Ndcct DataManagement Subscribe to the DCCF. The Ndccf_DataManagement_Subscribe is a message that requests a subscription for indication of UL SM NAS signaling. For further details, refer to Section 5.1.3.4 of Non-Patent Literature 4. The Ndccf_DataManagement_Subscribe includes an Information Element (IE) NdccfDataSubscription (refer to Section 5.1.3.4 of Non-Patent Literature 4).

The NdccfDataSubscription includes an Information Element (IE) dataSub (refer to DataSubscription in Section 5.1.6.2.8 of Non-Patent Literature 5). The dataSub includes an Information Element amfDataSub (refer to AmfEventSubscription in Section 6.2.6.2.3 of Non-Patent Literature 6). The amfDataSub includes an Information Element eventList (refer to AmfEvent in Section 6.2.6.2.3 of Non-Patent Literature 6). The eventList includes an Information Element type (refer to AmfEvent in Section 6.2.6.3.3 of Non-Patent Literature 6). A newly defined value (e.g., "UL SM NAS Transfer") is set as the value of the type.

The NdccfDataSubscription also includes an Information Element (IE) formatInstruct (refer to FormattingInstruction in Section 5.1.6.2.6 of Non-Patent Literature 4). The formatInstruct includes a newly defined Information Element consTrigNotif_ without fetch instruction, the value of which is configured to 1. In a case where the value of consTrigNotif_without fetch instruction is configured to 1, the DCCF does not transmit a Fetch instruction to the SMF for retrieving information. Instead, the SMF requests information from the DCCF at a timing that takes the congestion state into account. On the other hand, in a case where the value of the existing information element consTrigNotif is configured to 1, the DCCF transmits a Fetch instruction to the SMF to cause the SMF to acquire information.

The NdccfDataSubscription also includes an information element targetNfld (refer to FormattingInstruction in Section 5.1.6.2.6 of Non-Patent Literature 4.). The targetNfld is configured to the NF instance ID of the SMF itself.

Step S153: The DCCF transmits a message Namf_EventExposure_Subscribe (refer to Section 5.3.2.2 of Non-Patent Literature 6) to all AMFs.

The Namf_EventExposure_Subscribe includes an information element AmfCreateEventSubscription (can refer to 6.2.6.2.12 in Non-Patent Literature 6).

The AmfCreateEventSubscription includes an information element subscription (can refer to AmfEventSubscription in 6.2.6.2.2 in Non-Patent Literature 6). The subscription includes an information element eventList (can refer to AmfEvent in 6.2.6.2.3 in Non-Patent Literature 6). The information element eventList includes a type (can refer to AmfEventType in 6.2.6.3.3 in Non-Patent Literature 6). The value of the type (AmfEventType) is the value set in Step S152 ("UL SM NAS Transfer").

In addition, the subscription includes a newly defined information element delegatingNfId, in which the NF instance ID of the SMF set in Step S152 is set.

Step S154: The AMF transmits a message Overload Start to all base stations 10 (refer to Section 8.7.7 of Non-Patent Literature 7). While the Overload Start message is used in existing specifications as an indication for reducing signaling load at the AMF, in the present embodiment, it is newly used as an indication for reducing signaling load at the SMF. The Overload Start message includes a newly defined Information Element SMF Overload Response. The SMF Overload Response includes a newly defined Information Element SMF Overload Action. The SMF Overload Action is configured to a value for indicating a change to the congestion time SM NAS communication mode (e.g., "Indication of Congestion Time SM NAS Communication Mode Change").

Step S155: The base station 10 transmits a message System Information Block 1 (SIB1; broadcast information) to the terminal 20. For details of SIB1, refer to Non-Patent Literature 8. The SIB1 includes a newly defined Information Element for notifying a change to the SM NAS communication mode during congestion. The value of this Information Element is configured to indicate a change to the SM NAS communication mode during congestion (e.g., "Congestion Time SM NAS Communication Mode Change").

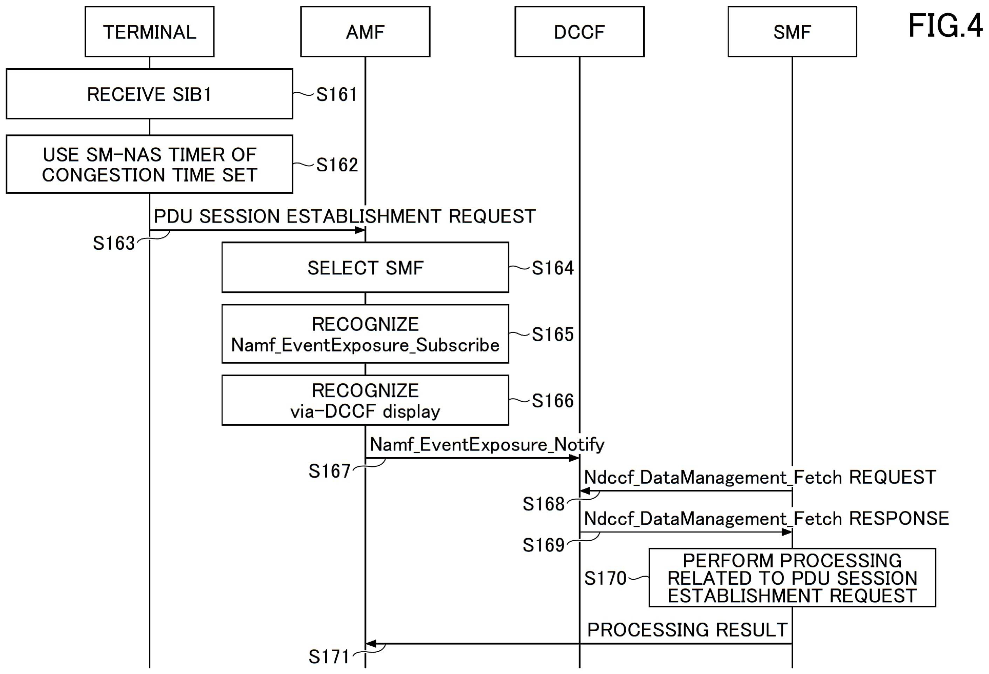

Next, the processing following step S155 will be described. FIG. 4 is a diagram illustrating an example of the second sequence diagram in the embodiment of the present invention. The processing of each step of FIG. 4 will be described below.

Step S161: The terminal 20 receives the broadcast information (SIB1) transmitted by the base station 10 in Step S155 of FIG. 3.

Step S162: The terminal 20 sets a configuration to use the congestion time set of SM-NAS timers.

Step S163: The terminal 20 transmits a PDU Session Establishment Request to the AMF. The message of the PDU Session Establishment Request includes information indicating that the terminal 20 has been configured to use the congestion time set of SM-NAS timers, as illustrated in Step S162 (e.g., "via-DCCFdisplay" (indicating that data transmitted from the AMF to the SMF is routed via the DCCF), or "congestion time set in use", etc.). The PDU Session Establishment Request may also be referred to as control information.

Step S164: The AMF selects the SMF.

Step S165: The AMF recognizes that the Namf_EventExposure_Subscribe message has been received from the DCCF. In this message, the AmfEventType is set to "UL SM NAS Transfer", and the delegatingNfld is set to the NF instance ID of the SMF selected in Step S164, as indicated in Step S153 of FIG. 3.

Step S166: The AMF recognizes that the terminal 20 has been configured to use the congestion time set of SM-NAS timers (e.g., the "via-DCCF display" described in Step S163). That is, during congestion, the terminal 20 is configured to extend the SM-NAS timer, thereby extending the time during which the terminal 20 waits for a response to control information, such as a PDU session establishment request, transmitted from the terminal 20 to the SMF via the AMF (i.e., the signaling exchange time between the SMF and the terminal 20). In cases where the terminal 20 is unable to use the congestion time set of SM-NAS timers (i.e., the timers cannot be extended), the AMF may transmit the above-mentioned control information to the SMF without routing it through the DCCF, in order to continue the procedure. In such a case, depending on the congestion state, the SMF may return a reject message to the AMF.

Step S167: The AMF transmits Namf_EventExposure_Notify (can refer to 5.3.2.4 of Non-Patent Literature 6) to the DCCF in response to the subscription message (Namf_EventExposure_Subscribe) received in Step S153 of FIG. 3.

The Namf_EventExposure_Notify includes an information element AmfEventNotification (can refer to 6.2.6.2.4 of Non-Patent Literature 6). The AmfEventNotification includes an information element reportList (can refer to 6.2.6.2.5 of Non-Patent Literature 6). The reportList includes an information element type (can refer to 6.2.6.3.3 of Non-Patent Literature 6). The value of the type is "UL SM NAS transfer" illustrated in Step S152 of FIG. 3. The reportList also includes a newly defined information element UL SM NAS container. The UL SM NAS container includes a PDU session establishment request received in Step S163.

That is, the AMF transfers the PDU session establishment request (control information) received from the terminal 20 to the DCCF.

The DCCF accumulates (stores) the UL SM NAS container containing the PDU session establishment request received from the AMF together with the NF instance ID (identifier of the SMF) of the SMF selected by the AMF in Step S164.

Step S168: The SMF transmits an Ndccf_DataManagement_Fetch request (can refer to 5.1.6.2.5 in Non-Patent Literature 4) to the DCCF at a timing that does not aggravate congestion. That is, the SMF transmits a message requesting the acquisition of control information such as the PDU session establishment request to the DCCF depending on a congestion state.

Step S169: The DCCF transmits an Ndccf_DataManagement_Fetch response to the SMF.

The Ndccf_DataManagement_Fetch response includes an information element dataReports (can refer to NotifSummaryReport in 5.1.6.2.9 in Non-Patent Literature 4). The dataReports includes a newly defined information element UL SM NAS container. The UL SM NAS container includes the PDU session establishment request included in the Namf_EventExposure_Notify received in Step S167.

Step S170: The SMF performs processing related to the PDU session establishment request included in the Ndccf_DataManagement_Fetch response received in Step S169.

Step S171: The SMF transmits to the AMF the processing result executed for the PDU session establishment request.

According to the above-described embodiment, it is possible to improve the congestion tolerance of the core network. This is because the SMF, by indicating to the DCCF that congestion has been detected, can retrieve data via the DCCF at a timing that does not exacerbate the congestion, instead of receiving data directly from the AMF. Here, the indication transmitted from the SMF to the DCCF includes a request to cause a plurality of network nodes belonging to a specific functional type (e.g., AMFs) to transmit signals to the DCCF, instead of the SMF, during congestion.

### (Device Configuration)

Next, an example of a functional configuration of the base station 10, the network node 30, and the terminal 20 that perform the processing and operation described so far will be described. The base station 10, the network node 30, and the terminal 20 include functions for performing the above-described embodiment. However, the base station 10, the network node 30, and the terminal 20 may each have only a part of the functions in the embodiment.

### <Base Station 10 and Network Node 30>

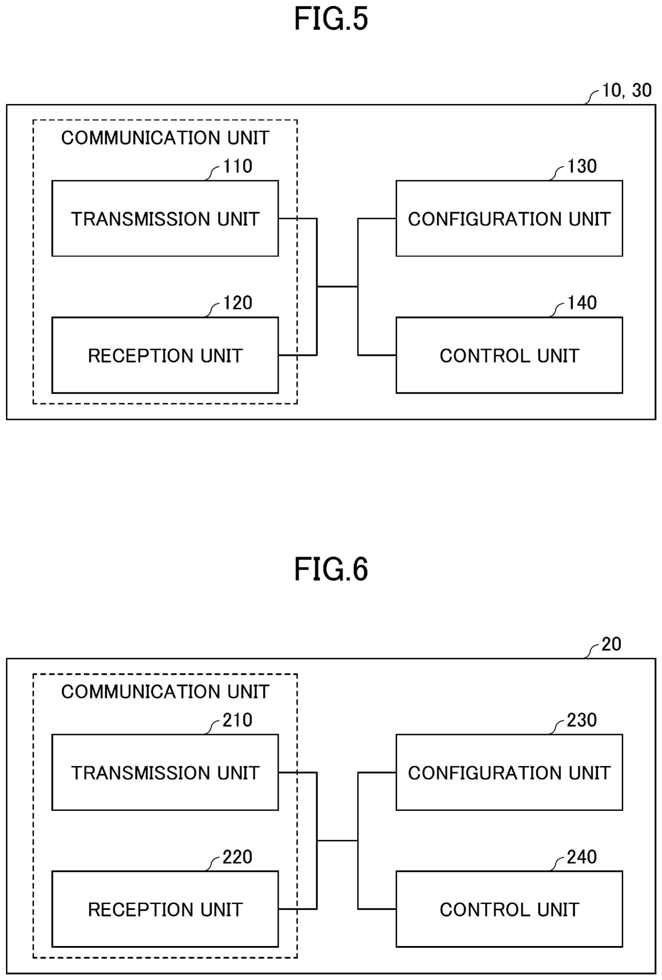

FIG. 5 is a diagram illustrating an example of the functional configuration of the base station 10 and the network node 30. As illustrated in FIG. 5, the base station 10 includes a transmission unit 110, a reception unit 120, a configuration unit 130, and a control unit 140. The functional configuration illustrated in FIG. 5 is merely an example. Any functional division or naming of functional units may be adopted, as long as the operation according to the embodiment of the present invention can be implemented. The network node 30 may have the same functional configuration as the base station 10. Further, in terms of system architecture, a network node 30 having multiple different functions may be implemented as a combination of multiple network nodes 30, each separated by function.

The transmission unit 110 includes a function for generating signals to be transmitted to the terminal 20 or to another network node 30, and for transmitting such signals via a wired or wireless connection. The reception unit 120 includes a function for receiving various signals transmitted from the terminal 20 or from another network node 30, and for acquiring, from the received signals, information of a higher layer, for example. A communication unit including the transmission unit 110 and the reception unit 120 may also be configured.

The configuration unit 130 stores preconfigured configuration information, as well as various types of configuration information to be transmitted to the terminal 20, in a storage device, and reads the information from the storage device as necessary.

The control unit 140 performs processing related to congestion indication, as described in the embodiments. In addition, the control unit 140 performs processing related to communication with the terminal 20. The functional components related to signal transmission within the control unit 140 may be included in the transmission unit 110, and the functional components related to signal reception within the control unit 140 may be included in the reception unit 120.

### <Terminal 20>

FIG. 6 is a diagram illustrating an example of the functional configuration of the terminal 20. As illustrated in FIG. 6, the terminal 20 includes a transmission unit 210, a reception unit 220, a configuration unit 230, and a control unit 240. The functional configuration illustrated in FIG. 6 is merely an example. Any functional division or naming of functional units may be adopted, as long as the operation according to the embodiment of the present invention can be implemented. A communication device functioning as a resource holder 20 may also have the same functional configuration as the terminal 20.

The transmission unit 210 generates a transmission signal from transmission data and transmits the transmission signal wirelessly. The reception unit 220 wirelessly receives various signals and extracts higher-layer signals from the received physical-layer signals. The reception unit 220 also has the function of receiving control signals, reference signals, or other types of signals transmitted from the network node 30. A communication unit including the transmission unit 210 and the reception unit 220 may also be configured.

The configuration unit 230 stores various types of configuration information received from the network node 30 by the reception unit 220 in a storage device, and reads the information from the storage device as necessary. The configuration unit 230 also stores preconfigured configuration information.

The control unit 240 performs processing related to congestion indication, as described in the embodiments. The functional components related to signal transmission within the control unit 240 may be included in the transmission unit 210, and the functional components related to signal reception may be included in the reception unit 220.

### (Hardware Structure)

The block diagrams that have been used to describe the above embodiments (FIG. 5 and FIG. 6) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmission unit or a transmitter. The method for implementing each component is not particularly limited as described above.

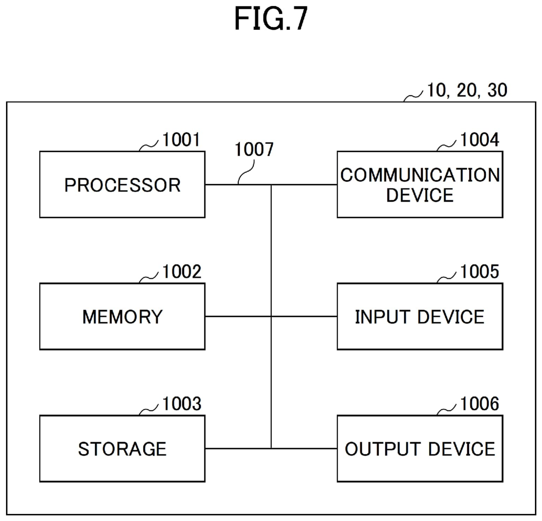

For example, the base station 10, the network node 30, the terminal 20 and the like according to an embodiment of the present disclosure may function as a computer that processes the radio communication method of the present disclosure. FIG. 7 is a diagram illustrating an example of the hardware configuration of the base station 10 and the terminal 20 according to the embodiment of the present disclosure. The network node 30 may have the same hardware configuration as the base station 10. The base station 10 and the terminal 20 may be physically configured as a computer device including a processor 1001, a memory 1002, a storage 1003, a communication device 1004, an input device 1005, an output device 1006, a bus 1007 and the like.

Note that in the present disclosure, the term "device" can be replaced with a circuit, an apparatus, a section, a unit or the like. The hardware configuration of the base station 10 and the terminal 20 may be configured to include one or more of the devices illustrated in the figure, or may not be configured to include part of the devices.

Each function of the base station 10 and the terminals 20 is implemented, for example, by allowing certain software (programs) to be read on hardware such as the processor 1001 and the memory 1002, and by allowing the processor 1001 to perform calculations to control communication via the communication device 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication device 1004, into the memory 1002, and executes various processes according to these. As for the programs, programs to allow computers to execute at least part of the operations of the above-described embodiments are used. For example, the control unit 140 of the base station 10 illustrated in FIG. 5 may be implemented by control programs that are stored in the memory 1002 and that operate on the processor 1001. In addition, for example, the control unit 240 of the terminal 20 illustrated in FIG. 6 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blu-ray (registered trademark) disk), a removable disk, a hard disk drive, a smart card, a flash memory device (e.g., a card, a stick, and a key drive), a magnetic stripe, a database, a server, or other appropriate storage media. The above recording medium may be a database including the memory 1002 and/or the storage 1003, a server, or any other appropriate medium.

The communication device 1004 is hardware (transmitting/receiving device) for allowing inter-computer communication via at least one of wired or wireless networks, and may be referred to as, for example, a "network device," a "network controller," a "network card," a "communication module," and so on. The communication device 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/reception unit, the transmission line interface, and the like, may be implemented by the communication device 1004. The transmitting/reception unit may be physically or logically divided into a transmission unit and a reception unit.

The input device 1005 is an input device that receives input from the outside (e.g., a keyboard, a mouse, a microphone, a switch, a button, a sensor, and so on). The output device 1006 is an output apparatus that outputs something to the outside (e.g., display, speaker, LED lamp). Note that the input device 1005 and the output device 1006 may be provided in an integrated structure (e.g., a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

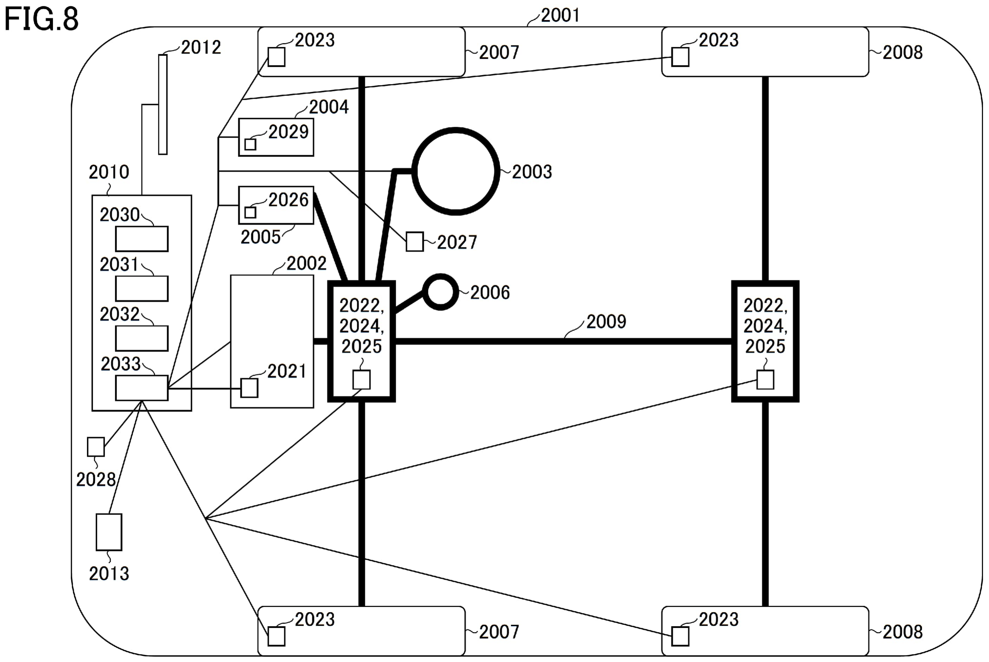

FIG. 8 shows an example of a configuration of a vehicle 2001. As illustrated in FIG. 8, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via the communication port. For example, the communication module 2013 transmits and receives data via the communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (e.g., outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Summary of Embodiments)

As described above, according to an embodiment of the present invention, a network node is provided. The network node includes:
a reception unit configured to receive, from a session management node, a message requesting accumulation of control signals transmitted from a mobility management node to the session management node;
a transmission unit configured to transmit, to the mobility management node, a message requesting transmission of the control signals to the network node; and
a control unit configured to accumulate the control signals received from the mobility management node,
wherein the transmission unit transmits the control signals to the session management node in response to a request from the session management node.

With the above configuration, the congestion tolerance of the core network can be improved.

The control unit accumulates the control signals together with an identifier of the session management node.

Further, according to another embodiment of the present invention, a network node is provided. The network node includes:
a transmission unit configured to, upon detecting congestion, transmit to a data management node a message requesting accumulation of control signals transmitted from a mobility management node to the network node, and later to transmit a message requesting acquisition of the control signals to the data management node, depending on a congestion state; and
a reception unit configured to receive the control signals from the data management node.

With the above configuration, the congestion tolerance of the core network can be improved.

Further, according to another embodiment of the present invention, a network node is provided. The network node includes:
a reception unit configured to receive, from a data management node, a message requesting transmission of control signals to the session management node during congestion; and
a transmission unit configured to transmit, to a base station, a message requesting transmission of broadcast information to a terminal, the broadcast information including an indication that the control signals are to be transmitted in a communication mode during congestion,
wherein the reception unit receives the control signals transmitted from the terminal in the communication mode during congestion, and
the transmission unit forwards the control signals to the data management node.

With the above configuration, the congestion tolerance of the core network can be improved.

Further, according to another embodiment of the present invention, a terminal is provided. The terminal includes:
a reception unit configured to receive, from a base station, broadcast information including an indication that control signals are to be transmitted in a communication mode during congestion;
a control unit configured to set a configuration to use a timer for the communication mode during congestion; and
a transmission unit configured to transmit to a mobility management node the control signals including information indicating the use of the timer for the communication mode during congestion.

With the above configuration, the congestion tolerance of the core network can be improved.

Further, according to another embodiment of the present invention, a base station is provided. The base station includes:
a reception unit configured to receive, from a mobility management node, a message requesting transmission of broadcast information to a terminal, the broadcast information including an indication that control signals are to be transmitted in a communication mode during congestion; and
a transmission unit configured to transmit the broadcast information to the terminal.

With the above configuration, the congestion tolerance of the core network can be improved.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information notification may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system(6G), xth generation mobile communication system (xG)(xG (x is, for example, an integer or a decimal)), FRA (Future Radio Access), NR (new Radio), New radio access(NX), Future generation radio access(FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system extended, modified, created or defined based thereon. A plurality of systems may be combined (e.g., a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (e.g., Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (e.g., which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (e.g., "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Network Node
- 1001: Processor
- 1002: Memory
- 1003: Storage
- 1004: Communication
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication Port (IO Port)

## Claims

1. A network node comprising:
a reception unit configured to receive, from a session management node, a message requesting accumulation of control signals transmitted from a mobility management node to the session management node;
a transmission unit configured to transmit, to the mobility management node, a message requesting transmission of the control signals to the network node; and
a control unit configured to accumulate the control signals received from the mobility management node,
wherein the transmission unit transmits the control signals to the session management node in response to a request from the session management node.

2. The network node according to claim 1, wherein the control unit accumulates the control signals together with an identifier of the session management node.

3. A network node comprising:
a transmission unit configured to, upon detecting congestion, transmit to a data management node a message requesting accumulation of control signals transmitted from a mobility management node to the network node, and later to transmit a message requesting acquisition of the control signals to the data management node, depending on a congestion state; and
a reception unit configured to receive the control signals from the data management node.

4. A network node comprising:
a reception unit configured to receive, from a data management node, a message requesting transmission of control signals to the session management node during congestion; and
a transmission unit configured to transmit, to a base station, a message requesting transmission of broadcast information to a terminal, the broadcast information including an indication that the control signals are to be transmitted in a communication mode during congestion,
wherein the reception unit receives the control signals transmitted from the terminal in the communication mode during congestion, and the transmission unit forwards the control signals to the data management node.

5. A terminal comprising:
a reception unit configured to receive, from a base station, broadcast information including an indication that control signals are to be transmitted in a communication mode during congestion;
a control unit configured to set a configuration to use a timer for the communication mode during congestion; and
a transmission unit configured to transmit to a mobility management node the control signals including information indicating the use of the timer for the communication mode during congestion.

6. A base station comprising:
a reception unit configured to receive, from a mobility management node, a message requesting transmission of broadcast information to a terminal, the broadcast information including an indication that control signals are to be transmitted in a communication mode during congestion; and
a transmission unit configured to transmit the broadcast information to the terminal.
